# DEMANDE DE BREVET EUROPEEN

(11) **EP 2 447 880 A1**
(43) Date de publication de la demande: **02.05.2012**
(21) Numéro de dépôt: 11186536.6
(22) Date de dépôt: 25.10.2011
(51) Int. Cl.: G06F 21/20

(54) **Procédé et système de contrôle de l'exécution d'une fonction protégée par authentification d'un utilisateur, notamment pour l'accès à une ressource**

(30) Priorité: 26.10.2010 FR 1058771
(71) Demandeur: Oberthur Technologies, 92300 Levallois-Perret (FR)
(72) Inventeur: Feraud, Alban, 75012 Paris (FR)
(74) Mandataire: Le Tourneau, Augustin

(57) **Abrégé**

La présente invention concerne un procédé et un système (1) de contrôle de l'exécution d'une fonction (C, C') protégée par authentification d'un utilisateur (U), prévue par exemple pour accéder à une ressource (S, 21). Le procédé comprend :
- saisir (E312), par l'utilisateur, des données personnelles (D1) à l'aide d'un équipement de saisie (100);
- authentifier l'utilisateur avec les données personnelles saisies pour autoriser ou non l'exécution de la fonction;
- dans une carte sécurisée (120) connectée à l'équipement de saisie (100), mémoriser (E316, E322, E322') des données d'authentification (D2) à validité limitée fonction des données saisies;
- lorsque la carte est connectée à un équipement de traitement (200) par lequel l'utilisateur (U) génère un message dont le traitement met en oeuvre ladite fonction, utiliser (E338, E339, E338', E339', E340'), les données mémorisées (D2) en tenant compte de la validité limitée, pour autoriser ou non l'exécution de cette fonction.

## Description

La présente invention concerne un procédé et un système de contrôle de l'exécution d'une fonction protégée par authentification.

Une fonction est dite protégée par authentification lorsque son exécution est conditionnée au résultat d'une authentification, généralement d'un utilisateur.

Ces fonctions sont notamment utilisées pour accéder à des ressources telles que des systèmes, des réseaux, des applications, des services sur carte ou serveur distant, ou encore des données stockées.

Une telle fonction peut notamment correspondre à des commandes mises en oeuvre par une entité *ad hoc* à réception d'un message demandant l'accès à une ressource.

L'authentification de l'utilisateur impliquant une telle fonction pour accéder à une de ces ressources est classiquement opérée sur un système informatique. Elle consiste généralement en une étape de saisie, par l'utilisateur, de données personnelles d'identification ou d'authentification à l'aide d'un équipement de saisie, puis en une étape d'authentification de l'utilisateur à partir des données personnelles saisies, par exemple par comparaison avec des données personnelles préenregistrées dans le système, pour générer une autorisation ou un refus d'exécuter la fonction protégée permettant l'accès à une ressource.

En cas d'autorisation, la fonction protégée est exécutée et l'accès à la ressource est obtenu pour l'utilisateur.

A titre illustratif, les données personnelles d'identification ou d'authentification peuvent être un mot de passe, un code d'identification PIN (pour *"Personal Identification Number")* ou des données biométriques.

Le détournement d'identité est un problème récurrent qui affecte la sécurité des systèmes d'accès à une ressource par authentification traitant ces fonctions protégées par authentification.

Dans de nombreuses stratégies d'attaques, le détournement d'identité consiste, pour une personne mal intentionnée, à dérober les données personnelles d'identification ou d'authentification, particulièrement sensibles, des utilisateurs en plaçant généralement un logiciel malveillant entre l'équipement de saisie et le logiciel de traitement qui réalise l'authentification à partir des données personnelles saisies.

Le logiciel malveillant reçoit les données sensibles saisies, réalise une copie de celles-ci, puis les communiquent au logiciel de traitement. De la sorte, aucune des deux parties impliquées dans l'accès par authentification (l'utilisateur et le logiciel de traitement) ne peuvent se douter de la présence du logiciel malveillant.

Disposant des données personnelles sensibles et connaissant la ressource dont elles permettent l'accès (notamment parce que le système informatique permet l'accès à une ressource particulière, par exemple un distributeur de billets), la personne mal intentionnée peut alors ré-accéder à la ressource, sous une fausse identité, celle de l'utilisateur spolié.

Ces stratégies d'attaques sont connues sous le terme d"'*attaque de l'homme du milieu"* (ou *"man in the middle attack"*)*.* Elles sont particulièrement dangereuses lorsqu'elles permettent le vol de données personnelles d'identification ou d'authentification pour l'accès à des services impliquant par exemple des transactions financières. Elles sont généralement mises en oeuvre au niveau de terminaux de saisie sans confiance, par exemple les terminaux de paiement des commerçants ou les distributeurs de billets.

Il existe donc un besoin d'améliorer les mécanismes de contrôle de l'exécution de fonctions protégées par authentification, notamment lorsqu'elles permettent l'accès à des ressources, pour faire face notamment à ces stratégies d'attaques.

Dans ce contexte, l'invention concerne notamment un procédé de contrôle de l'exécution d'une fonction protégée par authentification, comprenant les étapes suivantes :
- mémoriser, dans une structure à validité limitée, des données personnelles d'authentification fonction de données personnelles saisies, lors de la saisie de ces dernières par un utilisateur sur un équipement de saisie;
- vérifier la validité de la structure à validité limitée avant d'utiliser les données personnelles d'authentification qu'elle contient pour générer une autorisation ou un refus d'exécuter une fonction mise en oeuvre dans le traitement d'un message généré par un équipement de traitement distinct de l'équipement de saisie.

Selon l'invention, la saisie des données personnelles et leur traitement pour l'accès à une ressource par l'exécution de la fonction protégée peuvent être dissociés, dans le temps et/ou dans l'espace. Cela est rendu possible par la mémorisation dans une structure à validité limitée, conformément à l'invention, de données personnelles d'authentification fonction des données saisies, permettant ainsi de faire le lien entre les deux opérations de saisie et de traitement.

En outre, ces deux opérations sont réalisées chacune en lien avec des équipements distincts: l'équipement de saisie pour la première opération, et l'équipement de traitement pour la seconde. Ainsi, l'utilisateur n'a pas à procéder à une saisie de données sensibles sur l'équipement de traitement, ce qui empêche toute personne mal intentionnée ayant trafiqué ce dernier de récupérer les données sensibles au niveau de moyens de saisie sur cet équipement.

Selon l'invention, la dissociation des deux opérations ne permet pas à un *"homme du milieu",* à la fois, de récupérer les données sensibles et de connaître la ressource à laquelle elles permettent l'accès (c'est-à-dire la fonction protégée correspondante). Comme on le verra par la suite, l'utilisateur peut utiliser un équipement de saisie en lequel il a confiance, par exemple un équipement qui lui est propre. Il n'est ainsi plus contraint d'opérer une saisie de données personnelles sur un équipement tiers de confiance douteuse.

La validité limitée des données personnelles d'authentification permet, quant à elle, de garantir l'efficacité de l'invention en évitant que des données sensibles, potentiellement volées, puissent être utilisées indéfiniment, par exemple dans le temps et/ou dans l'espace, pour permettre à la personne mal intentionnée de faire exécuter la fonction dont l'exécution est protégée par ces données, et ainsi d'accéder à la ressource protégée correspondante.

Dans le cas d'une validité temporelle, la durée de validité peut être fixée en fonction des risques encourus, des fonctions et ressources concernées.

De façon similaire, une validité spatiale définissant une distance maximale d'utilisation de la structure depuis un point initial peut reposer sur une mesure GPS.

Ainsi, le contrôle de l'exécution des fonctions protégées par authentification, et de l'éventuel accès à une ressource qui en découle, s'en trouve améliorée.

Selon un aspect de l'invention, le procédé comprend les étapes suivantes :
- saisir, par l'utilisateur, les données personnelles à l'aide de l'équipement de saisie;
- authentifier l'utilisateur à partir des données personnelles saisies pour générer l'autorisation ou le refus d'exécuter la fonction protégée;
- exécuter la fonction en cas d'autorisation;
   procédé dans lequel :
   les étapes de mémorisation et de vérification sont mises en oeuvre dans un module à mémoire connecté respectivement à l'équipement de saisie lors des étapes de saisie et de mémorisation, et à l'équipement de traitement lors des étapes de vérification et d'exécution;
   ladite structure à validité limitée comprend des données personnelles d'authentification à validité limitée par association d'une durée de validité aux données personnelles d'authentification.

La connexion, bien qu'éventuellement physique, est avant tout une connexion logique permettant d'assurer une communication entre les équipement et module alors en jeu.

Seul le module à mémoire, qui peut être une carte à microprocesseur sécurisée classique, manipule ici la structure de données à validité limitée, et donc les données personnelles d'authentification à validité limitée qu'elle contient. Grâce aux techniques de sécurisation largement connues pour ce type de module ou carte, ces données peuvent être gérées comme des clés secrètes internes, et sont donc manipulées de façon sécurisée lors des deux phases de saisie et d'exploitation pour autoriser ou non l'exécution de la fonction protégée.

Dans un mode de réalisation, la vérification de la validité de la structure pour utiliser les données personnelles d'authentification comprend la vérification de la durée écoulée depuis la génération de cette structure à validité limitée comparativement à la durée de validité qui est associée aux données personnelles d'authentification. Cette disposition consiste, en d'autres termes, à vérifier que les données personnelles d'authentification à validité limitée sont toujours valides lorsque leur utilisation en vue d'obtenir une autorisation d'exécuter la fonction est menée. On évite ainsi que ces données sensibles à validité limitée ne puissent être réutilisées à grande échelle par une personne malveillante. Selon des réalisations, notamment certaines décrites par la suite, la génération de l'autorisation ou du refus peut en variante être fonction du temps écoulé depuis la fin de l'alimentation électrique de la mémoire stockant la structure à validité limitée.

Dans un mode de réalisation, la génération de l'autorisation ou du refus est fonction d'une vérification des données personnelles saisies avec des données de référence, le résultat de la vérification étant obtenu en utilisant lesdites données personnelles d'authentification mémorisées dans la structure à validité limitée mémorisées. L'authentification de l'utilisateur comprend ici, de façon classique, la vérification des données personnelles saisies aux fins d'autoriser ou non l'accès à la ressource. La présente disposition permet de maintenir ces mécanismes grâce à l'utilisation des données personnelles d'authentification à validité limitée qui sont mémorisées dans le module à mémoire selon l'invention.

Selon une caractéristique particulière de l'invention, le procédé comprend une étape de comparaison des données personnelles saisies avec des données personnelles préenregistrées dans le module à mémoire, et les données personnelles d'authentification mémorisées dans la structure à validité limitée comprennent le résultat de la comparaison. Dans cette configuration, les opérations d'authentification sont réalisées au niveau de l'équipement de saisie mais l'autorisation à partir de cette authentification n'est pas encore réalisée. En effet, seul le résultat de l'authentification (comparaison positive ou non des données saisies) est transmis comme donnée sensible à validité limitée selon l'invention. Ainsi, on évite de communiquer, à un équipement de traitement, les données personnelles telles que saisies (mot de passe, code PIN, etc.).

En variante, les données personnelles d'authentification mémorisées dans la structure à validité limitée comprennent les données personnelles saisies, et leur utilisation comprend une sous-étape de comparaison des données personnelles d'authentification mémorisées dans la structure à validité limitée avec des données personnelles préenregistrées dans le module à mémoire. Cette disposition permet de simplifier les opérations réalisées par l'équipement de saisie, notamment s'il comprend de faibles ressources de traitement ou si, pour les besoins de comparaison, il s'avère nécessaire par exemple d'accéder à une base de données sécurisée.

Dans un mode de réalisation de l'invention, la durée de validité associée aux données personnelles d'authentification est comptabilisée par la décharge d'une capacité électrique prévue dans le module à mémoire. La capacité électrique sert alors de compteur temporel. Cette configuration est notamment simple à mettre en oeuvre dans tout type d'entité électronique susceptible de stocker les données à validité limitée selon l'invention.

En particulier, les données personnelles d'authentification sont mémorisées dans une mémoire volatile du module à mémoire, alimentée temporairement par ladite capacité électrique. La sécurisation du contrôle par authentification selon l'invention est encore accrue par cette disposition, car les données sensibles à validité limitée sont automatiquement supprimées à l'expiration du délai de validité, de par la nature même de la mémoire volatile. En outre, cette configuration est simple à mettre en oeuvre.

Dans un autre mode de réalisation, les données personnelles d'authentification sont mémorisées dans une mémoire volatile du module à mémoire, et une durée de validité qui leur est associée est définie par les propriétés d'évanescence de la mémoire volatile lorsque son alimentation est coupée. Cette disposition présente l'avantage de ne pas faire appel à des moyens spécifiques pour comptabiliser la durée de validité. En effet, du fait de l'évanescence des données dans ce type de mémoire volatile, on s'assure que les données sensibles à validité limitée s'effacent automatiquement à l'expiration de la durée d'évanescence. On choisira donc des mémoires volatiles dont les propriétés d'évanescence correspondantes conviennent à la durée de vie ou validité souhaitée pour les données personnelles d'authentification générées.

Dans encore une autre mode de réalisation, les données personnelles d'authentification sont mémorisées dans une mémoire volatile d'un module à mémoire, continuellement alimentée pendant le contrôle de l'exécution de la fonction protégée ou dans une mémoire réinscriptible, par exemple type EEPROM (pour *"Electrically-Erasable Programmable Read-Only Memory"),* et une durée de validité qui leur est associée est définie par mémorisation d'une grandeur temporelle, par exemple une durée et un instant de début de validité, ou une seule date de fin de validité, dans une variable associée, en mémoire, aux données personnelles d'authentification. On dispose ainsi des éléments suffisants pour que le module à mémoire puisse vérifier que les données personnelles d'authentification utilisées pour l'obtention de l'autorisation sont toujours valides, par comparaison de la durée ou date (incluant heure, minute, etc.) de fin de validité avec le temps écoulé depuis la génération de ces données.

Selon une caractéristique de l'invention, l'utilisation, par le module à mémoire, des données personnelles d'authentification à validité limitée comprend la vérification de la validité de ces données en utilisant la grandeur temporelle mémorisée et des données temporelles de référence qui lui sont transmises par l'équipement de traitement. Cette disposition permet d'utiliser un référentiel commun pour évaluer la limite temporelle de validité. Il peut notamment s'agir d'un horloge commune aux différents équipements (par exemple une horloge réseau), ou une horloge propre à ceux-ci.

Dans un mode de réalisation, la fonction protégée est une commande mise en oeuvre, à réception d'un message de l'équipement de traitement, par un module à microprocesseur stockant la structure à validité limitée. Selon diverses approches, la commande protégée peut être directement indiquée dans le message transmis ou être une sous-commande qui dépend d'une telle commande indiquée dans le message (par exemple une sous-commande appelée lors de l'exécution de cette commande).

Selon une autre caractéristique de l'invention, un module à mémoire mémorisant la structure à validité limitée et les données personnelles d'authentification qu'elle contient est amovible, et est placé dans l'équipement de saisie lors de la saisie et placé dans l'équipement de traitement lors de la vérification de la validité de la structure et lors de l'utilisation des données personnelles d'authentification à validité limitée. Cette disposition confère un grand confort pour l'utilisateur, car celui-ci peut ne transporter ou ne fournir, aux fins de procéder au contrôle de l'exécution d'une fonction protégée par authentification pour par exemple accéder à une ressource, que le module à mémoire amovible sur lequel sont enregistrées les données sensibles résultant de la saisie et nécessaire pour l'authentification.

En variante, un module à mémoire mémorisant la structure à validité limitée et les données personnelles d'authentification qu'elle contient est relié physiquement à l'équipement de saisie pendant le contrôle de l'exécution de la fonction protégée (c'est-à-dire pendant les deux étapes de saisie et de traitement), et l'équipement de traitement communique avec le module à mémoire par communication sans contact. Cette configuration s'avère simple d'utilisation pour l'utilisateur, car celui-ci peut simplement saisir ses données personnelles de façon confidentielle sur un équipement de saisie qui lui est propre (par exemple son téléphone mobile) et présenter ce dernier à l'équipement de traitement pour effectuer la suite des opérations nécessaires au contrôle de l'exécution de la fonction pour par exemple accéder à une ressource correspondante. Cette communication sans contact recouvre également le cas où celle-ci transite par l'équipement de saisie embarquant le module à mémoire. C'est par exemple le cas lorsqu'une carte SIM (pour *"Subscriber Identity Module")* dans un téléphone mobile, utilise un contrôleur NFC NFC (pour *"Near Field Communication"* soit "Communication en champ proche") du téléphone mobile pour communiquer avec un équipement de traitement externe.

Selon une caractéristique particulière, le module à mémoire mémorisant la structure à validité limitée et les données personnelles d'authentification est une carte à microprocesseur sécurisée. Cette disposition est avantageuse en ce que la carte à microprocesseur comprend, de façon classique, des moyens de sécurisation des données sensibles et également des moyens efficaces de communication avec l'un ou l'autre des équipements de saisie et de traitement.

En particulier, la communication entre l'équipement de saisie ou l'équipement de traitement et ladite carte à microprocesseur est sans contact. Par ce biais, ces équipements et la carte (module à mémoire) sont connectés pour chacune des opérations nécessaires au contrôle de l'exécution de la fonction. Le canal de communication peut être conforme à la norme NFC, à la norme ISO 14443 ou à une norme similaire.

En variante, notamment si la carte à microprocesseur est amovible pendant ces opérations, une communication par contact peut être envisagée entre l'équipement de saisie ou l'équipement de traitement et ladite carte à microprocesseur.

Dans un mode de réalisation, le traitement du message de l'équipement de traitement génère une réponse comprenant au moins une valeur de réponse qui dépend de l'autorisation ou du refus généré. Cette configuration trouve de nombreuses applications, définies d'une façon générale dans la réussite ou non d'un accès demandé par l'utilisateur (par exemple un paiement réussi ou non, l'accès à compte sécurisé, etc.).

Dans certaines applications en variante, la valeur de réponse peut toutefois être indépendante de l'autorisation ou du refus généré (de tout ou partie de fonctions protégées). Comme illustré par la suite, l'exécution d'une fonction protégée peut venir simplement mettre à jour un état interne du module à mémoire, tel un drapeau de détection d'un accès frauduleux.

Dans un mode de réalisation de l'invention, l'utilisateur saisit au moins une information représentative d'une donnée financière, et ladite information est mémorisée dans la structure à validité limitée commune avec les données personnelles d'authentification, aux fins d'une opération (par exemple une transaction) financière ultérieure dont l'accès dépend de l'autorisation ou du refus généré. On peut ainsi, grâce à l'invention, sécuriser l'ensemble des données, sensibles ou non, que l'utilisateur saisit en vue d'une opération ultérieure. Cette disposition accroît de la sorte la confidentialité de ces données.

Dans un mode de réalisation de l'invention, l'équipement de saisie est un équipement de confiance pour l'utilisateur. Cette configuration tire la plénitude de l'efficacité de l'invention, car l'opération de saisie est ici fortement protégée. Ainsi, une personne mal intentionnée, ne pouvant avoir accès à cet équipement de confiance, est incapable de récupérer les données personnelles saisies directement par l'utilisateur.

En particulier, l'équipement de saisie est un téléphone mobile de l'utilisateur.

Corrélativement, l'invention concerne un module à mémoire comprenant au moins une mémoire et un processeur pour exécuter des instructions, le module à mémoire étant configuré pour :
- mémoriser, dans une structure à validité limitée, des données personnelles d'authentification fonction de données personnelles saisies par un utilisateur et reçues d'un équipement de saisie auquel le module à mémoire est relié (c'est-à-dire lors de la saisie);
- vérifier la validité de la structure à validité limitée avant d'utiliser les données personnelles d'authentification qu'elle contient pour générer une autorisation ou un refus d'exécuter une fonction protégée par authentification et mise en oeuvre dans le traitement d'un message reçu d'un équipement de traitement distinct de l'équipement de saisie.

De même, l'invention concerne un système de contrôle de l'exécution d'une fonction protégée par authentification d'un utilisateur, comprenant :
- un équipement de saisie pour saisir, par l'utilisateur, des données personnelles;
- un équipement de traitement distinct de l'équipement de saisie et apte à générer, sous l'action de l'utilisateur, un message à traiter;
- un module à mémoire comprenant au moins une mémoire et un processeur, et configuré pour authentifier l'utilisateur à partir des données personnelles saisies de sorte à générer une autorisation ou un refus d'exécuter une fonction protégée mise en oeuvre dans le traitement dudit message;
   dans lequel le module à mémoire est configuré pour :
- lorsqu'il est connecté à l'équipement de saisie, générer et mémoriser, dans sa mémoire, des données personnelles d'authentification à validité limitée qui sont fonction des données personnelles saisies et leur associer un paramètre de validité; et
- lorsqu'il est connecté à l'équipement de traitement, utiliser, en fonction du paramètre de validité associé, les données personnelles d'authentification mémorisées pour générer l'autorisation ou le refus d'exécuter la fonction.

Le module à mémoire et le système d'authentification présentent des avantages similaires à ceux du procédé exposé ci-dessus. En particulier, ils permettent de décorréler les opérations de saisie de données sensibles et de traitement de ces données en vue d'obtenir une autorisation d'exécution la fonction protégée, procurant une sécurité accrue contre les attaques de l'homme du milieu.

De façon optionnelle, le module à mémoire ou le système peut comprendre des moyens se rapportant aux caractéristiques du procédé exposé précédemment, et notamment une capacité électrique utilisée pour décompter une durée de validité, une mémoire volatile qui s'efface automatiquement à l'expiration de ladite durée, une mémoire amovible ou fixe, une carte à microprocesseur pour stocker les données personnelles d'authentification à validité limitée selon l'invention entre les divers équipements, des moyens de communication avec ou sans contact entre la carte à microprocesseur et les divers équipements.

En particulier ceux-ci peuvent comprendre des moyens de saisie, par l'utilisateur, des données personnelles à l'aide de l'équipement de saisie; des moyens d'authentification pour authentifier l'utilisateur à partir des données personnelles saisies de sorte à générer l'autorisation ou le refus d'exécuter la fonction protégée; des moyens d'exécution pour exécuter la fonction en cas d'autorisation. De plus le module à mémoire configuré pour la mémorisation et la vérification peut être connecté respectivement à l'équipement de saisie lors de la saisie et de la mémorisation, et à l'équipement de traitement lors de la vérification et de l'exécution. Dans ce cas, on peut prévoir que ladite structure à validité limitée comprend des données personnelles d'authentification à validité limitée par association d'une durée de validité aux données personnelles d'authentification.

Par ailleurs, selon un autre mode de réalisation, les données personnelles d'authentification mémorisées dans la structure à validité limitée peuvent comprendre les données personnelles saisies. Le module à mémoire ou le système peut alors, pour utiliser ces données, comprendre un moyen de comparaison des données personnelles d'authentification mémorisées dans la structure à validité limitée avec des données personnelles préenregistrées dans le module à mémoire.

Selon un autre mode de réalisation, ladite structure à validité limitée comprend des données personnelles d'authentification à validité limitée par association d'une durée de validité aux données personnelles d'authentification. Dans ce cas, on peut prévoir que le module à mémoire comprend une capacité électrique de sorte que la durée de validité associée aux données personnelles d'authentification est comptabilisée par la décharge de la capacité électrique prévue dans le module à mémoire.

Et notamment, le module à mémoire peut comprendre une mémoire volatile mémorisant les données personnelles d'authentification et alimentée temporairement par ladite capacité électrique.

Selon un encore autre mode de réalisation, le module à mémoire peut comprendre une mémoire volatile continuellement alimentée pendant le contrôle de l'exécution de la fonction protégée ou une mémoire réinscriptible, laquelle mémoire mémorisant les données personnelles d'authentification. Dans ce cas, le module à mémoire est configuré pour associer une durée de validité à ces données personnelles d'authentification par mémorisation d'une grandeur temporelle dans une variable associée, en mémoire, à ces mêmes données personnelles d'authentification.

L'invention concerne également une entité électronique comprenant :
- au moins une interface de communication pour recevoir des données personnelles saisies par un utilisateur et un message à traiter,
- une mémoire stockant, dans une structure de données à validité limitée, des données personnelles d'authentification qui sont fonction des données personnelles saisies,
- un moyen de limitation, dans le temps ou dans l'espace, de la validité de la structure de données mémorisant les données personnelles d'authentification, et
- un moyen de vérification de la validité de la structure à validité limitée avant d'utiliser les données personnelles d'authentification qu'elle contient pour générer une autorisation ou un refus d'exécuter une fonction protégée par authentification et mise en oeuvre dans le traitement du message reçu.

En particulier, l'entité peut être du type carte à microprocesseur.

L'entité électronique présente des avantages similaires à ceux du procédé, du module à mémoire et du système exposés ci-dessus.

De façon optionnelle, l'entité électronique peut comprendre des moyens se rapportant aux caractéristiques du procédé exposé précédemment, et notamment des moyens mettant en oeuvre une durée de validité, tels qu'une capacité électrique ou une variable en mémoire, une mémoire volatile ou non.

D'autres particularités et avantages de l'invention apparaîtront dans la description ci-après, illustrée par les dessins ci-joints, dans lesquels :
- la **figure 1** illustre des mécanismes classiques d'authentification d'un utilisateur U pour accéder à une ressource;
- la **figure 2** illustre schématiquement une mise en oeuvre de l'invention;
   et
- les figures 3 à 5 illustrent trois exemples d'accès à un service de signature numérique protégé par authentification selon l'invention.

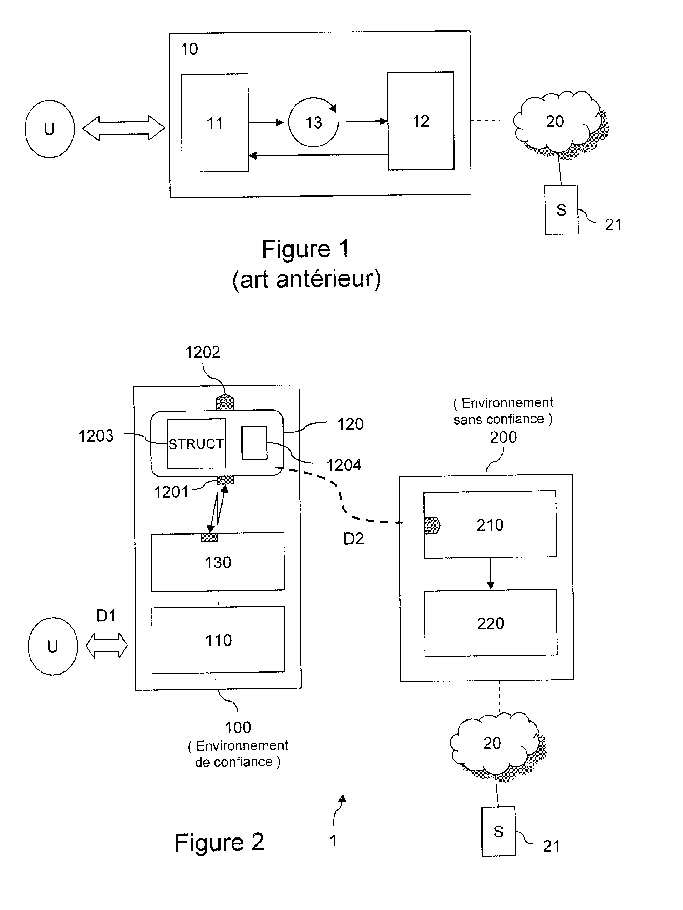

La figure 1 illustre des mécanismes classiques d'accès à une ressource par un utilisateur U, par exemple pour accéder à un service de paiement chez un commerçant.

Ces opérations requièrent l'interaction entre un utilisateur U et un terminal de paiement 10. Cette interaction consiste notamment en la saisie de données personnelles d'identification ou d'authentification qui sont sensibles à d'éventuelles attaques, à l'aide d'un clavier ou de tout autre type de moyens de saisie 11. A titre illustratif, ces données personnelles sensibles peuvent être un mot de passe, un code d'identification PIN (pour *"Personal Identification Number")* ou des données biométriques permettant de s'authentifier et de permettre une transaction financière avec le commerçant.

D'autres données non sensibles peuvent également être saisies à cette occasion, par exemple un montant indiqué par l'utilisateur pour la transaction financière avec le commerçant.

Un message commandant une transaction financière et comprenant ces données saisies, est alors transmis à un logiciel de traitement 12.

Le message comprend notamment une commande pour la transaction financière.

L'exécution de cette commande dépend notamment de la présence de droits exigés spécifiques à cette commande, en l'espèce à une authentification valide réalisée par validation des données personnelles saisies.

Le logiciel 12 vérifie, par des mécanismes classiques et généralement par comparaison avec des données préenregistrées, les données personnelles saisies par l'utilisateur pour générer une autorisation ou un refus d'exécuter la transaction financière. Par exemple, le PIN saisi par l'utilisateur U peut être comparé à un PIN mémorisé dans une carte de paiement insérée dans le terminal de paiement 10.

En cas d'authentification positive, l'exécution de la commande de transaction financière est autorisée permettant l'accès au service de paiement S. Des échanges avec un serveur de paiement (symbolisé ici par le réseau 20 et le serveur 21) sont alors menés.

En cas d'authentification négative, la transaction financière ne peut être réalisée.

Dans ce contexte, les attaques par l'homme du milieu mettent en oeuvre un logiciel malveillant 13 comme représenté schématiquement sur la figure. Le logiciel malveillant 13 intercepte les données saisies, qu'elles soient sensibles ou non, les copie et les transmet au logiciel 12. L'intervention du logiciel malveillant 13 est ainsi transparente pour l'utilisateur et pour le logiciel 12.

La **figure 2** illustre schématiquement un système 1 mettant en oeuvre l'invention selon un mode de réalisation. L'utilisateur U doit procéder aux mêmes saisies (de données sensibles et éventuellement non sensibles) que classiquement pour l'utilisation de commandes protégées par des droits relatifs à une authentification.

Dans le système de la **figure 2****,** l'utilisateur U interagit avec un premier équipement de saisie 100. Cet équipement est de préférence un équipement de confiance, c'est-à-dire un équipement de l'utilisateur U lui-même, par exemple son téléphone portable ou son ordinateur.

L'équipement de saisie 100 comprend une interface de saisie 110, une carte à microprocesseur sécurisée 120 et un lecteur embarqué 130 de carte à microprocesseur. D'autres fonctionnalités classiques d'un téléphone mobile peuvent être prévues dans l'équipement de saisie 100, sans toutefois qu'elles soient décrites ici. Notamment des moyens d'alimentation internes à l'équipement 100 (une batterie par exemple) permettant d'alimenter, comme source électrique principale, la carte à microprocesseur 120.

L'interface de saisie 110 peut prendre la forme d'un clavier conventionnel de téléphone, aux fins par exemple de saisir un code PIN ou un mot de passe. En variante ou en combinaison, elle peut comprendre un capteur biométrique apte à acquérir des données biométriques propres à l'utilisateur U, ou toute autre interface.

Le lecteur embarqué 130 peut être indifféremment à contact ou sans contact pour lire et/ou écrire dans la carte à microprocesseur 120. Il est relié à l'interface de saisie 110 au travers d'une architecture classique de système électronique, par exemple au travers d'un bus de données et d'un microprocesseur (non représentés).

La carte à microprocesseur ou "carte à *puce"* 120 est de préférence une carte amovible personnelle à l'utilisateur U, par exemple au format ID-1, que ce dernier peut aisément extraire de l'équipement de saisie 100 pour la présenter à un autre lecteur 210 de carte à microprocesseur d'un équipement de traitement 200, comme décrit par la suite. En variante, la carte à microprocesseur 120 peut être physiquement attachée à l'équipement de saisie 100 pendant l'ensemble des opérations d'accès à la ressource S, c'est-à-dire pendant la saisie, le contrôle de la commande d'accès protégée par authentification et les échanges pendant l'accès.

Dans ces deux cas, et en particulier lorsqu'elle est physiquement attachée à l'équipement de saisie 100, la carte à microprocesseur 120 peut être remplacée par un module à mémoire plus simple doté d'une mémoire et d'un microcontrôleur ou processeur, pour la mise en oeuvre des opérations selon l'invention. La mémoire peut être volatile ou non comme expliqué par la suite.

La carte à microprocesseur 120 comprend une interface de communication sans contact 1201 avec le lecteur sans contact 130 de l'équipement. La carte à microprocesseur 120 comprend également une interface sans contact de communication 1202 avec le lecteur sans contact 210 de l'équipement de traitement 200. En particulier, ces deux interfaces sont confondues en une seule interface. Elles peuvent toutefois être distinctes, par exemple l'une à contact et l'autre sans contact.

Elles permettent, comme on le verra par la suite, à la carte à microprocesseur, de recevoir des données saisies par l'utilisateur sur l'équipement de saisie 100 et de recevoir un message depuis l'équipement de traitement 200 en réponse à une action de l'utilisateur sur celui-ci, le traitement de ce message mettant en oeuvre notamment la commande d'accès protégée par authentification, soit parce qu'il la contient directement, soit parce qu'il fait appel à une telle commande interne à la carte à microprocesseur.

La carte à microprocesseur 120 comprend également une mémoire 1203 permettant de stocker une structure de données STRUCT comme décrite ci-après, ainsi que des moyens 1204 permettant de définir un paramètre de validité pour ladite structure, par exemple une durée de validité DV ou un zone géographique de validité. Pour la suite des explications, il sera fait principalement référence à une durée de validité. Des mécanismes similaires à ceux décrits ci-après peuvent toutefois être mis en oeuvre pour une validité géographique.

La carte à microprocesseur 120 est configurée pour, lorsqu'elle est connectée à l'équipement de saisie 100, générer et mémoriser, dans sa mémoire 1203, des données personnelles d'authentification à validité limitée qui sont fonction de données personnelles saisies par l'utilisateur et pour leur associer une durée de validité, par exemple au travers de ladite structure.

Comme décrit ci-après au travers de différents exemples, les moyens 1204 peuvent définir une telle durée de validité DV de manière explicite ou de manière implicite en fonction des propriétés de l'architecture retenue.

La durée de validité DV est associée à la structure STRUCT pour en définir une limite temporelle de validité.

Cette durée est fonction d'un niveau de sécurité souhaité, lequel varie d'une application à l'autre. A titre d'exemple, pour une commande protégée de transaction financière sécurisée par code PIN, cette durée peut être fixée à quelques dizaines de secondes, par exemple 1 à 2 minutes. Pour une commande d'accès sécurisé à un réseau informatique ou de communication, elle peut être plus grande, de l'ordre de quelques minutes, par exemple 5, 10 ou 15 minutes.

Dans un mode de réalisation, la mémoire 1203 est une mémoire volatile.

La mémoire 1203 peut alors être continuellement alimentée par une source d'alimentation principale (batterie de l'équipement 100), notamment lorsque la carte 120 n'est pas extraite de l'équipement de saisie 100 pour l'ensemble des opérations d'accès à la ressource. Dans ce cas, le moyen 1204 peut consister en une variable en mémoire définissant la durée de validité DV de la structure de données STRUCT à compter de sa génération (c'est-à-dire de sa création et/ou de sa mise à jour), comme décrit par la suite, ou définissant une date et heure de fin de validité, ou encore une date de début de validité si la durée depuis cette date est préfixée.

Si la carte 120 a vocation à être extraite de l'équipement de saisie 100 pour être présentée à l'équipement de traitement 200, la mémoire volatile 1203 peut être, lorsque la source d'alimentation principale se trouve être déconnectée, temporairement alimentée par une source interne évanescente d'électricité, par exemple une capacité électrique chargée par la source d'alimentation principale lorsque la carte 120 est en position dans l'équipement de saisie 100.

La source interne évanescente officie en tant que moyen 1204 car elle peut maintenir l'alimentation de la mémoire volatile (qui se vide lorsque toute alimentation est coupée) pendant une durée qui dépend de ses propriétés (notamment la valeur de la capacité).

En particulier, dans le cas d'une capacité électrique, la valeur de la capacité est choisie en fonction de la durée de validité DV souhaitée. En cas de décharge complète de la capacité, la structure de données STRUCT présente dans la mémoire 1203 est alors automatiquement effacée. Des mécanismes de contrôle de charge et de décharge de la capacité permettent de garantir le décompte de la durée de validité à partir d'un instant précis souhaité, notamment lorsque la carte 120 est extraite de l'équipement de saisie 100 ou lorsque la structure de données STRUCT est générée, et de poursuivre éventuellement ce décompte lorsque la carte 120 est à nouveau alimentée par l'équipement de traitement 200.

Par exemple des commandes de contrôle de la capacité peuvent être prévues et utilisées par la carte 120 pour contrôler cette durée de validité DV. Notamment, il peut être prévue une commande de charge pour charger la capacité et implicitement déclencher le début du décompte de DV en fin de charge, une commande de décharge pour décharger la capacité de sorte à forcer un état invalide de la structure de données STRUCT, et une commande de niveau de charge pour connaître le niveau de charge de la capacité et donc déterminer de façon directe si la durée DV a expiré ou non.

D'une façon générale, ce cas peut s'appliquer à toute mémoire apte à conserver des données seulement pour une certaine période de temps (qui définit implicitement la durée de validité DV).

Dans un autre exemple, la mémoire volatile 1203 choisie peut présenter des propriétés d'évanescence (notamment une durée d'évanescence) compatibles avec la durée de validité DV souhaitée. Dans ce cas, le moyen 1204 est réalisé par ces propriétés d'évanescence, puisqu'à la coupure de l'alimentation de la mémoire 1203 (notamment lors de l'extraction de la carte 120 ou lors d'une commande de fin d'alimentation de la mémoire), la structure de données STRUCT demeure dans la mémoire 1203 jusqu'à expiration de la durée d'évanescence. Des commandes permettant de contrôler l'alimentation et la fin d'alimentation de cette mémoire sont à cet égard prévues.

Dans un autre mode de réalisation, la mémoire 1203 est une mémoire réinscriptible, auquel cas le moyen 1204 peut consister en une variable en mémoire définissant une information temporelle, par exemple la durée de validité DV de la structure de données STRUCT à compter de sa création ou mise à jour, une date et heure de fin de validité, ou encore une date et heure de début de validité si une durée préfixée est convenue à l'avance. En variante, même si la mémoire est réinscriptible, le moyen 1204 peut être réalisé à l'aide d'une source interne évanescente (par exemple une capacité électrique) qui est dédiée à cette fin, chargée par l'alimentation principale, et qui se décharge à compter de la fin de charge faisant suite à la réception d'une commande de charge. Dans ce cas, tant que la capacité électrique n'est pas entièrement déchargée, la structure STRUCT est considérée comme valide.

Dans le cas particulier d'une validité géographique (qui peut d'ailleurs venir en complément d'une validité temporelle telle que décrite ci-avant), il peut être défini une zone de validité autour d'un point initial, par exemple l'emplacement de la carte 120 au moment où a été créée la structure STRUCT. Cette dernière demeure valide au sein de cette zone. Notamment des moyens adaptés peuvent être prévus pour définitivement effacer la structure (ou la rendre définitivement invalide) dès lors qu'une sortie de cette zone est effectuée. En variante, tout retour dans la zone après une sortie peut rendre à nouveau la structure valide.

Les moyens adaptés peuvent combiner un récepteur GPS capable de calculer des distances par rapport au point initial, une distance seuil délimitant la zone (par exemple un rayon), et une mémoire dotée de moyens d'effacement dès que la distance courante dépasse la distance seuil.

Comme indiqué précédemment, une mise en oeuvre de l'invention consiste, pour l'utilisateur U, à saisir des données personnelles d'identification ou d'authentification, c'est-à-dire des données personnelles sensibles D1, au moyen de l'équipement de saisie 100. En complément, l'utilisateur U peut également saisir d'autres données (éventuellement non sensibles) nécessaires à l'accès et/ou à la réalisation du service S auquel il souhaite accéder, par exemple le montant d'une transaction financière, le nom d'un fichier à récupérer, une date, etc.

Cette action de saisie conduit à la mise à jour de données ou d'un statut internes à la carte à microprocesseur 120, au niveau d'une structure de données STRUCT éventuellement créée à cette occasion. Une durée de validité lui est alors associée à ce moment là, à l'aide de l'un des moyens évoqués précédemment.

La structure de données STRUCT peut être, de façon non limitative, un simple fichier électronique, une liste, un arbre, un graphe, une base de données, etc.

Comme on le verra dans les exemples qui suivent, la structure de données STRUCT peut mémoriser, comme données personnelles d'authentification D2, directement les données personnelles saisies par l'utilisateur U, sans qu'aucun traitement ne soit réalisé sur ces dernières.

En variante, le dispositif de saisie 100 peut procéder à un pré-traitement de celles-ci pour produire d'autres données personnelles d'authentification D2 fonction de ces données personnelles saisies. A titre d'exemple, la vérification d'un code PIN saisi par l'utilisateur U est réalisée par le terminal de saisie 100, ici le téléphone portable de l'utilisateur U, et une information représentative du résultat de sa comparaison avec un code PIN de référence (et non le code PIN saisi) est mémorisée dans la structure de données STRUCT (avec éventuellement d'autres données nécessaires à la réalisation du service S souhaité). Ce résultat, par exemple un simple bit ou un booléen, est un résultat d'authentification de l'utilisateur.

Au sein de la carte 120, la structure de données STRUCT est sécurisée. En effet, la carte 120 met en oeuvre, de façon classique, de nombreux mécanismes permettant de garantir la confidentialité des données qu'elle mémorise.

Une fois la structure de données STRUCT créée et mise à jour, l'utilisateur U déconnecte la carte à microprocesseur 120 de l'équipement 100, ce qui peut avoir pour effet d'enclencher le décompte de la durée de validité DV si celui-ci n'a pas déjà eu lieu (en cas de déclenchement par exemple dès la fin de charge de la capacité suite à une commande de charge ou lorsque la durée DV est mémorisée au travers d'une information temporelle en mémoire).

L'utilisateur U connecte alors la carte 120 à l'équipement de traitement 200, par exemple en introduisant la carte dans un emplacement prévu à cet effet, équipé d'un lecteur de carte. Cette connexion n'a bien sûr pas pour effet d'arrêter le décompte de la durée de validité. Notamment, dans le cas de l'utilisation d'une capacité, ce décompte n'est pas arrêté car il faudrait l'émission d'une commande spécifique de charge pour la recharger.

L'équipement de traitement 200 est classiquement un équipement de faible confiance et non sûr, typiquement un terminal/une borne de paiement d'un tiers, un distributeur, un serveur Internet, etc.

Comme représenté sur la figure, l'équipement de traitement 200 comprend un lecteur 210 de carte à microprocesseur (ou de mémoire selon le cas) compatible avec l'interface de communication 1202 de la carte 120, et comprend un module de traitement 220. L'équipement de traitement 200 comprend également une interface utilisateur (non représentée) permettant à l'utilisateur d'interagir avec l'équipement pour notamment accéder à une ressource souhaitée.

Le module de traitement 220 contrôle ainsi les échanges avec la carte 120 pour réaliser cet accès à la ressource souhaitée, et lui envoie notamment un message d'accès à la ressource. Ce message peut comprend une commande C protégée par authentification ou faire appel à une fonction, routine ou commande C', également protégée par authentification, mise en oeuvre dans la carte 120.

C'est alors la carte à microprocesseur 120 qui réalise le contrôle de l'exécution de la commande protégée, par l'authentification de l'utilisateur U à l'aide des données personnelles d'authentification D2 qu'elle mémorise dans la structure à validité limitée. Ce contrôle permet d'autoriser ou non l'exécution de la commande, fonction ou routine protégée, et donc l'accès ou non au service S souhaité. Pour la suite, on fera principalement référence à une "commande protégée" pour désigner ces commandes, fonctions ou routines protégées par authentification.

La carte à microprocesseur 120 est ainsi configurée pour, lorsqu'elle est connectée à l'équipement de traitement 200, utiliser, en fonction de la durée de validité associée DV, les données personnelles d'authentification mémorisées D2 pour générer l'autorisation ou le refus d'exécuter la commande protégée qu'elle a reçue.

De la sorte, la structure de données STRUCT sert d'interface entre la saisie de données sensibles sur l'équipement 100 et leur utilisation lors de l'accès au service S à l'aide de l'équipement 200.

L'invention s'applique également à l'accès à des services locaux/ressources locales à l'équipement de traitement 200 (par exemple une fonctionnalité de cet équipement ou des données qu'il stocke), sans requérir un accès via un réseau informatique 20 comme représenté sur la figure.

Lors du contrôle de l'exécution de la commande protégée par authentification de l'utilisateur, la carte à microprocesseur 120 tient compte de la durée de validité DV associée à la structure STRUCT pour utiliser ou non les données personnelles d'authentification D2 qu'elle contient.

Ainsi, lorsque l'utilisateur génère, au niveau de l'équipement de traitement 200, la commande C/C' d'accès protégé à un service nécessitant l'intervention de la carte 120 pour vérifier des droits exigés, la validité de la structure STRUCT est tout d'abord vérifiée par la carte à réception de la commande.

Si la durée de validité est explicite (indication de l'heure de fin de validité par exemple), la carte 120 vérifie que la durée n'a pas expirée, en utilisant notamment l'horloge de l'équipement de traitement.

Si elle est implicite (utilisation d'une capacité électrique par exemple), la carte 120 vérifie si la capacité est totalement déchargée ou non. Cela peut être réalisé par exemple en utilisant une commande de niveau de charge de la capacité, ou peut être obtenue en essayant d'accéder à la structure de données STRUCT dans la mémoire volatile si cette dernière est alimentée par la capacité ou si on utilise les propriétés de rémanence de la mémoire. En effet, dans ces cas, si la capacité s'est totalement déchargée ou la durée de rémanence expirée, la structure de données s'est effacée.

En cas de validité de la structure de données STRUCT, les données personnelles d'authentification D2 sont accédées, permettant à la carte 120 de vérifier les droits exigés, par exemple l'exactitude du code PIN saisi. La vérification des droits génère une autorisation ou un refus d'exécuter la commande protégée en question, et donc d'accéder ou non au service souhaité.

Le contrôle selon l'invention permet ainsi d'accéder de façon sécurisée à un grand nombre de services fournis par l'équipement de traitement 200, au travers de la carte 120: transaction financière, signature numérique, consultation de comptes, accès à des données, etc., en évitant l'exploitation frauduleuse de données sensibles saisies par un utilisateur.

Les équipements de saisie 100 et de traitement 200, ainsi que la carte à microprocesseur 120, comprennent des moyens matériels et logiciels configurés pour mettre en oeuvre les différentes étapes et opérations décrites ici.

Par la suite, on évoquera des exemples dans lesquels l'exécution d'une commande C directement indiquée dans le message transmis par l'équipement de traitement est conditionnée à l'authentification réussie de l'utilisateur à l'aide des données personnelles d'authentification contenues dans la structure STRUCT à validité limitée.

Toutefois, comme évoqué ci-dessus, une commande, fonction ou routine protégée par authentification peut être mise en oeuvre lors du traitement du message, sans qu'elle soit explicitement indiquée dans le message.

On notera d'ailleurs que l'invention est indifférente du fait que les données personnelles d'authentification mémorisées dans la structure STRUCT influent ou non le résultat renvoyé par la carte 120 en réponse à la commande C. A titre d'exemple, la réponse à la commande C peut être la valeur des données personnelles d'authentification mémorisées (on retourne par exemple le résultat de l'authentification mémorisée). Dans un autre exemple, la valeur retournée peut dépendre de la valeur des données personnelles d'authentification (par exemple si une sous-commande C' parmi plusieurs n'est pas exécutée, le résultat peut changer). Enfin, dans un autre exemple, le résultat retourné est indépendant de l'exécution ou non de la commande protégée par l'authentification précitée (par exemple, l'exécution de cette commande permet de mettre à jour un indicateur interne à la carte 120).

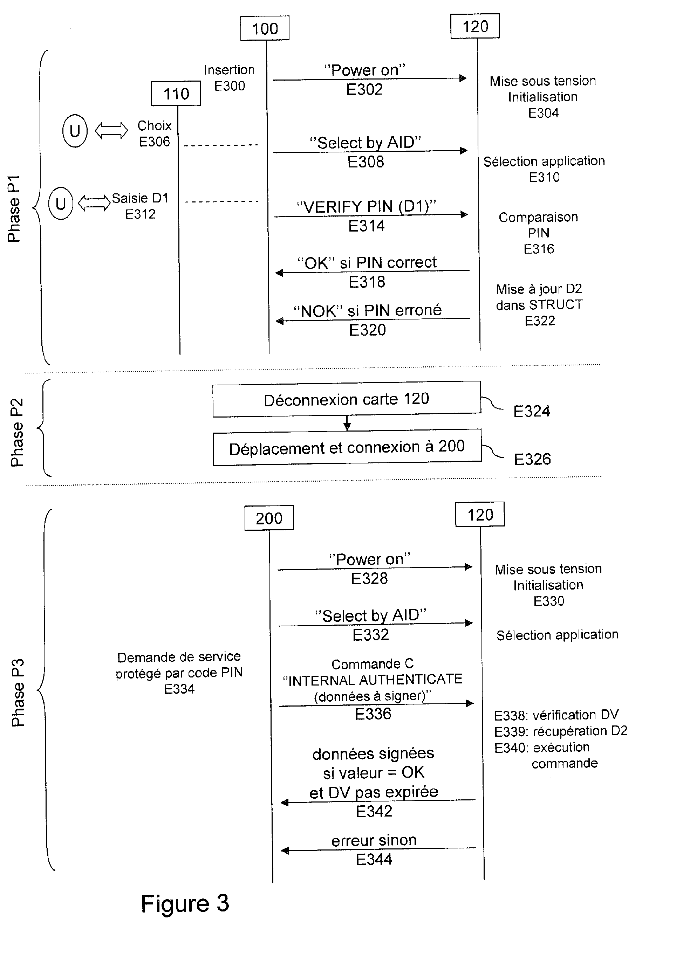

La **figure 3** illustre un premier exemple d'accès à un service de signature numérique selon l'invention.

Dans cet exemple, la carte 120 mémorisant la structure STRUCT est amovible. De plus, le moyen 1204 est mis en oeuvre au travers d'une capacité électrique prévue dans la carte 120 pour alimenter temporairement la mémoire volatile 1203. En outre, les données saisies D1 par l'utilisateur U sont pré-traitées au niveau de l'équipement de saisie 100 avant mémorisation du résultat dans la structure STRUCT. Ainsi, lors d'une première phase P1 débutant à l'étape E300, la carte à microprocesseur (ou module à mémoire) amovible 120 est insérée dans l'équipement de saisie 100, ici le téléphone mobile de l'utilisateur.

Cette insertion engendre un signal de mise sous tension E302, déclenchant la mise sous tension de la carte à microprocesseur 120 et son initialisation E304 selon des mécanismes classiques. A ce stade, le microprocesseur (non représenté) et la mémoire 1203 de la carte 120 sont alimentés par une source principale d'alimentation (la batterie du téléphone par exemple).

En vue de la mise en oeuvre d'un service S souhaité par l'utilisateur U, ce dernier sélectionne, via un menu et l'interface 110, une application de pré-traitement en vue de l'accès au service (E306).

Une commande de sélection de l'application est alors générée (E308) par l'équipement de saisie 100 à l'attention de la carte 120. Cette commande de sélection "Select" est conforme à la norme ISO/IEC 7816-4 de communication entre une carte à microprocesseur 120 et un lecteur de carte 130 (équipant ici l'équipement 100).

L'application sélectionnée est alors exécutée (E310) dans la carte 120, demandant la saisie d'une donnée personnelle d'identification ou d'authentification D1 de l'utilisateur U et éventuellement de données complémentaires nécessaires au service souhaité. Dans l'exemple, l'utilisateur U saisit, via l'interface 110, son code PIN (E312).

Un commande de vérification du code PIN "VERIFY PIN" conforme à la norme ISO/IEC 7816-4 précitée est alors transmise (E314) à la carte 120. Cette commande comprend le code PIN saisi par l'utilisateur U.

De façon classique, la carte 120 récupère le code PIN saisi, puis le compare avec un code PIN de référence préenregistré en mémoire sécurisée de la carte 120 (E316) de sorte à générer un réponse positive OK en cas de code PIN correct (E318) et une réponse négative NOK en cas de code PIN erroné (E320).

De façon parallèle, la carte 120 met à jour (crée si nécessaire) la structure de données STRUCT en y insérant le résultat de la comparaison E316 (et éventuellement les données complémentaires qu'elle a reçues), lors d'une étape E322. Ce résultat de la comparaison est, ici, dénommé "données personnelles d'authentification" D2 de l'utilisateur.

A cette même occasion, la carte 120 renseigne la durée de validité DV associée à la structure de données et donc aux données personnelles d'authentification D2, en émettant une commande de charge de la capacité 1204. La durée DV se décompte par exemple à partir de la fin de charge de la capacité électrique 1204, par décharge progressive de cette capacité.

Ces actions de l'étape E322 peuvent par exemple être réalisées par un programme de contrôle comme suit:

```
  si PIN OK
     charge 1204;
     renseigner OK dans STRUCT;
  }
  sinon {
     décharge 1204;
     renseigner NOK dans STRUCT;
  }
```

Lors d'une deuxième phase P2, l'utilisateur U met fin à l'alimentation principale de la carte 120 par l'équipement de saisie 100, par extraction de la carte 120 notamment, à l'étape E324.

Grâce à la capacité 1204 en cours de décharge, la mémoire volatile 1203 reste alimentée temporairement et les données (notamment STRUCT) qu'elle stocke sont toujours valides. Si la carte 120 n'est pas réutilisée avant l'expiration de la durée DV (donc avant la décharge complète de la capacité), la mémoire volatile et donc la structure STRUCT s'effacent.

A l'étape E326, la carte 120 est physiquement déplacée vers l'équipement de traitement 200 auquel elle est ensuite connectée.

La troisième phase P3 commence alors par l'étape E328 de commande de mise sous tension de la carte (similaire à E302), conduisant à la mise sous tension et l'initialisation de la carte 120 (E330 - similaire à E304).

Une commande de sélection à l'attention de la carte 120 est alors générée (E332) de façon similaire à l'étape E308.

A l'étape E334, l'utilisateur sollicite, sur l'équipement de traitement 200, un service (ici le calcul d'une signature numérique) protégé par code PIN. Cette détection déclenche l'envoi d'une commande C "INTERNAL AUTHENTICATE" conforme à la norme ISO/IEC 7816-4 (étape E336). Cette commande comprend en paramètre les données à signer et son exécution est, selon la norme, conditionnée à l'exécution avec succès de commandes antérieures, par exemple à une authentification valable antérieur comme prévu dans le présent exemple.

Grâce à l'invention, la condition de code PIN validé (ou non le cas échéant) est présente dans la structure STRUCT de la carte 120 au travers des données personnelles d'authentification D2, sans que l'utilisateur U n'ait à saisir son code PIN sur l'équipement de traitement 200.

A ce stade, l'étape E338 sur la carte 120 consiste à vérifier la validité de la structure STRUCT, eu égard à la durée de validité DV associée.

Cette vérification peut notamment consister à vérifier le niveau de charge de la capacité 1204 (à l'aide d'une commande appropriée) et/ou la présence de la structure STRUCT dans la mémoire 1203. En effet, si la durée de validité a expirée (la capacité 1204 est totalement déchargée) alors que la carte 120 n'était plus alimentée, la mémoire volatile 1203 s'est effacée et la condition de code PIN validé n'est plus disponible.

Si la durée DV a expiré, la structure STRUCT peut être marquée comme invalide (par exemple au travers d'un bit), afin de simplifier l'étape E338 lors de demandes d'accès ultérieures.

Si la durée DV n'a pas expiré et donc la structure STRUCT est bien valide, on récupère, à l'étape E339, les données personnelles d'authentification D2 dans la structure STRUCT.

A l'étape E340, la commande C "INTERNAL AUTHENTICATE" est exécutée en tenant compte des données personnelles d'authentification D2 récupérées, comme droits exigés. Ainsi, elle est exécutée uniquement si ces données D2 révèlent une condition de code PIN validé.

Par exemple, une fonction particulière COPY D2 peut être exécutée par la carte lors de cette étape pour copier les données D2 dans une variable globale utilisée classiquement pour stocker le résultat de l'authentification par PIN et à laquelle accède l'exécution de la commande INTERNAL AUTHENTICATE. Ainsi, on ne modifie pas cette dernière.

Bien entendu, en variante, une fonction VALIDATE PIN OK peut être appelée pour vérifier directement si la condition de code PIN validé est bien présente, et pour autoriser dans ce cas directement l'exécution de la commande INTERNAL AUTHENTICATE.

Dans le cas d'une condition de code PIN validé, la signature des données à signer, à l'aide d'une clé interne à la carte 120, est réalisée.

De ce fait, la signature numérique de données (ou l'accès à la ressource/service) est protégée par une vérification positive des données D2.

La carte 120 envoie alors, à l'équipement de traitement 200, une réponse à la commande : les données signées (E342) ou un message d'erreur (E344) selon que la commande a pu être exécutée ou non.

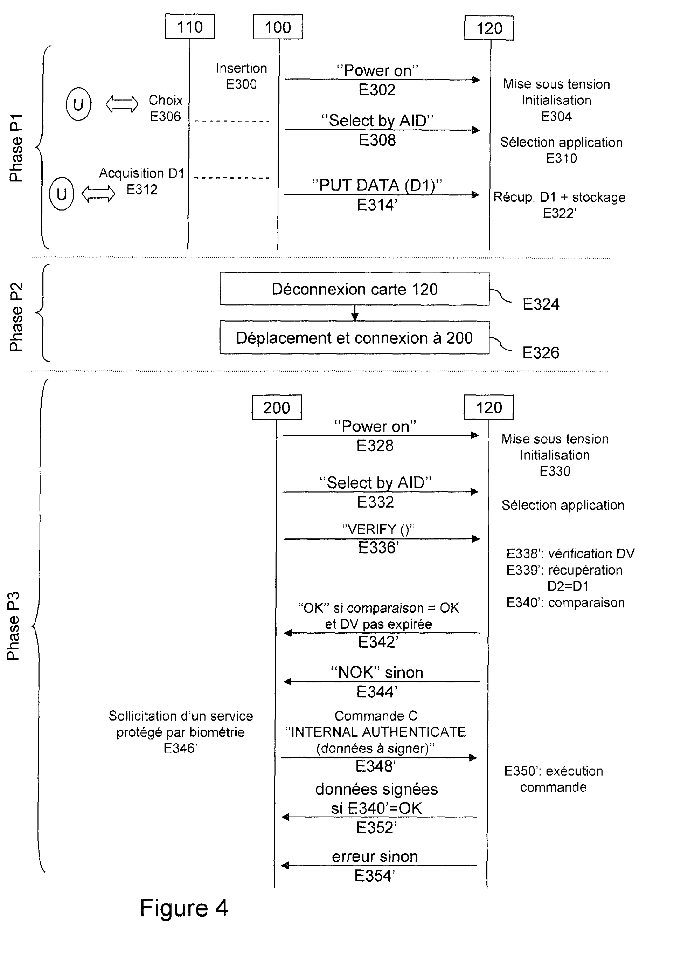

La figure 4 illustre un deuxième exemple d'accès à un service de signature numérique selon l'invention et sensiblement similaire à celui de la figure 3, si ce n'est que les données personnelles D1 telles que saisies par l'utilisateur U sont directement mémorisées (sans changement) dans la structure STRUCT.

En outre, en lieu et place de la saisie du code PIN, cet exemple met en oeuvre l'acquisition d'une mesure biométrique de l'utilisateur U, par exemple une empreinte digitale.

Lors de la phase P1, les étapes E300 à E312 sont similaires à celles décrites en référence à la figure 3, si ce n'est qu'il est demandé à l'utilisateur U d'acquérir une empreinte digitale plutôt qu'un code PIN.

A l'étape E312 consistant à la saisie des données sensibles D1 par l'utilisateur U, ce dernier présente un doigt à un capteur biométrique 110 de sorte à acquérir des données personnelles d'identification D1 représentatives de l'empreinte digitale.

Ces données D1 sensibles sont transmises à la carte 120 au travers d'une commande "PUT DATA" conforme à la norme ISO/IEC 7816-4 (étape E314').

Au niveau de la carte 120, ces données D1 sont récupérées puis mémorisées directement dans la structure de données STRUCT (étape E322').

Bien entendu des données complémentaires peuvent être saisies/acquises par l'utilisateur U et mémorisées en complément dans la structure STRUCT.

A ce stade, le décompte de la durée de validité DV peut être enclenché, par la commande de charge de la capacité 1204.

Suite à la phase 1, la phase P2 est similaire à celle de la figure 3, à savoir comprenant les étapes E324 et E326.

La phase P3 débute de la même façon que la même phase de la figure 3, avec en particulier les étapes E328 à E332.

L'équipement de traitement 200 peut être configuré pour, à détection de la carte 120, envoyer une commande de traitement des données D1 mémorisées dans la structure STRUCT (étape E336'), dans l'exemple une commande de vérification de l'empreinte digitale avec une empreinte de référence préenregistrée en mémoire de la carte 120.

A noter que cette vérification peut être conduite sur la carte 120 en réponse à la commande C protégée telle que prévue ci-après, sans avoir recours à cette commande E336' préalable.

A l'étape E338', la validité de la structure STRUCT est vérifiée eu égard à la durée DV associée.

Si la structure n'est plus valide, elle est indiquée comme tel et une réponse négative NOK (E344') est retournée à l'équipement de traitement 200.

Si la structure est valide, les données D1 sont récupérées de la structure STRUCT à l'étape E339'.

Les empreintes D1 acquises lors de la phase P1 sont alors comparées (E340') à des empreintes de référence.

Le résultat de la comparaison, correcte OK (E342') ou incorrecte NOK (E344'), est retourné à l'équipement de traitement 200.

En parallèle, le résultat de la comparaison est mémorisé dans une variable globale (de la carte) utilisée classiquement pour stocker le résultat de l'authentification par données biométriques et à laquelle accède l'exécution d'une commande ultérieure protégée telle que INTERNAL AUTHENTICATE.

En variante, ce résultat peut être mémorisé directement dans la structure de données STRUCT comme condition de données biométriques validées ou erronées.

A l'étape E346', l'équipement de traitement 200 détecte que l'utilisateur U sollicite un service (ici le calcul d'une signature numérique) protégé par authentification biométrique et requérant donc une authentification de l'utilisateur. Cette demande de service déclenche l'envoi d'une commande C "INTERNAL AUTHENTICATE" conforme à la norme ISO/IEC 7816-4 (étape E348'), ayant en paramètre les données à signer et étant protégée par authentification de l'utilisateur.

La carte 120 exécute (E350') alors la commande C "INTERNAL AUTHENTICATE".

A noter que si à l'étape E340' le résultat de la comparaison est mémorisé dans la variable globale classique, l'étape E350' reste classique, la commande INTERNAL AUTHENTICATE étant conditionnée à la présence d'une condition validée dans cette variable globale.

Dans le cas de la variante, une fonction VALIDATE DATA OK peut être exécutée pour vérifier dans la structure STRUCT la présence ou non de la condition validée, et autoriser ou non en conséquence l'exécution de la commande INTERNAL AUTHENTICATE.

Le cas échéant les données à signer sont signées à l'aide d'une clé interne à la carte 120, selon des mécanismes classiques.

La carte 120 envoie alors une réponse à la commande INTERNAL AUTHENTICATE, à destination de l'équipement de traitement: les données signées (E352') ou un message d'erreur (E354').

Encore une fois, la signature numérique des données (ou l'accès à la ressource/service) est protégée par une vérification positive des données biométriques.

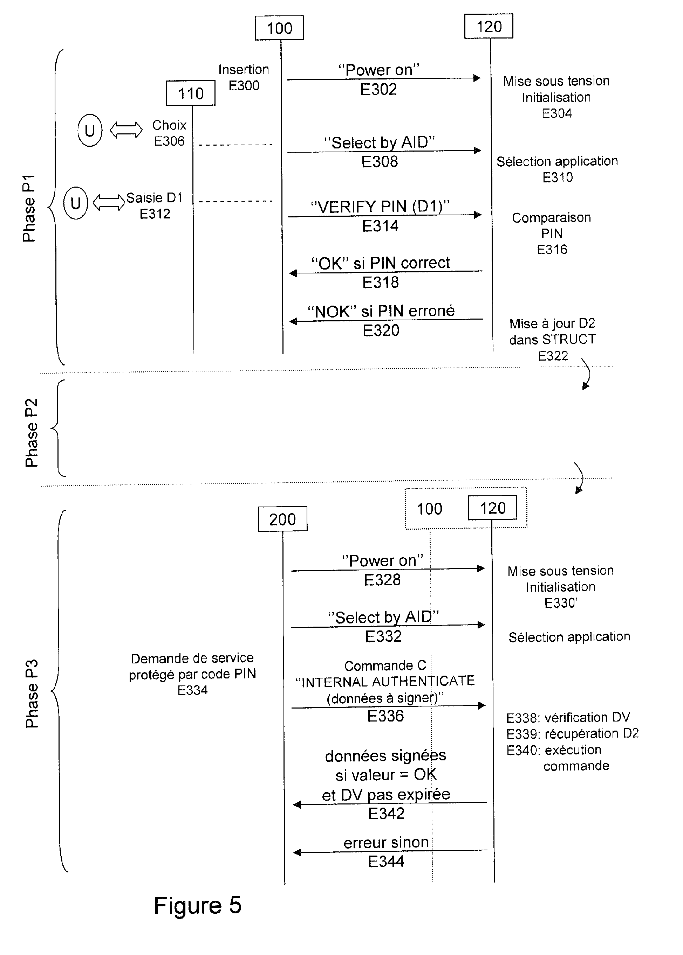

La **figure 5** illustre un troisième exemple de signature numérique selon l'invention sensiblement similaire à celui de la **figure 3**, dans lequel la carte 120 mémorisant la structure STRUCT est logée de façon permanente dans l'équipement de saisie 100 (tout au moins pendant l'ensemble des opérations décrites ci-après correspondant à l'ensemble du processus d'authentification de l'utilisateur U). C'est par exemple le cas d'une carte SIM dans un téléphone portable.

Dans ce cas, les étapes E300 à E322 de la phase P1 sont identiques aux étapes de la phase P1 de la **figure 3**.

Pour sa part, la phase P2 est vide car il n'y a pas de dissociation physique entre la carte 120 et l'équipement 100. Cette phase P2 commence donc dès lors que les données personnelles d'identification saisies D1 ont été traitées par la carte 120 sous la commande de l'équipement de saisie 100, c'est-à-dire dès lors que la structure de données STRUCT a été générée avec les données D2 résultant du traitement. De même, la durée de validité commence à être décomptée à compter de la fin de ce traitement, par le chargement de la capacité 1204 par exemple.

Durant la phase P3, l'ensemble {équipement de saisie 100 - carte 120} communique avec l'équipement de traitement 200, par exemple à l'aide d'un protocole de communication sans contact (NFC ou équivalent).

A noter que selon un mode de réalisation, l'équipement de traitement 200 peut communiquer directement avec la carte 120. C'est le cas dans l'exemple de la figure 2, où l'interface 1202 de communication permet une communication directe avec l'équipement 200. A noter que si les deux interfaces de communication 1201 et 1202 ne font qu'une, il est envisagé de désactiver le lecteur 130 de l'équipement de saisie 100 afin de permettre une communication de la carte 120 avec l'équipement de traitement 200 sans interférence. Sinon des moyens de discrimination des communications avec chacune des interfaces 1201 et 1202 peuvent être prévus.

Dans une variante, l'équipement de traitement 200 peut communiquer avec l'équipement de saisie 100 qui transmet alors les informations et requêtes à la carte 120. Dans ce cas, la carte 120 peut être dotée d'une seule interface de communication 1201 avec le lecteur 130.

La **figure 5** illustre la phase P3 dans le cas où l'équipement de traitement 200 communique directement avec la carte 120.

L'initialisation de la communication entre ces deux entités est réalisée au cours d'échanges de messages classiques, représentés sur la figure par l'étape E330'.

Les étapes E332 à E344 qui suivent sont similaires aux étapes portant les mêmes références de la **figure 3**.

Bien entendu, les différentes réalisations évoquées ci-dessus avant les trois exemples des **figures 3** à **5** peuvent être appliquées à chacun de ces exemples par exemple pour modifier le moyen 1204, la nature de la mémoire 1203, les interfaces de communication 1201 et 1202, pour remplacer la carte à microprocesseur 120 par un module à mémoire muni d'un microcontrôleur permettant la communication avec les lecteurs 30 et 210, etc.

Les exemples qui précèdent ne sont que des modes de réalisation de l'invention qui ne s'y limite pas.

Notamment, bien que l'invention ait été illustrée ci-dessus pour l'accès à un service de signature numérique, elle peut tout autant s'appliquer à l'accès à des données stockées ou à d'autres ressources.

Par exemple, des données personnelles (biométriques, photographie ou d'identification) sont mémorisées dans un passeport électronique mais accessible uniquement après authentification. A l'aide d'un téléphone portable, l'utilisateur peut pré-autoriser l'accès à ces données en saisissant un code PIN générant une structure à validité limitée STRUCT avec la condition de code PIN validé/erroné, par les mécanismes selon l'invention.

Le douanier peut ainsi accéder aux données personnelles grâce à cette pré-autorisation pendant la durée de validité DV.

## Revendications

1. Procédé de contrôle de l'exécution d'une fonction (C, C') protégée par authentification, comprenant les étapes suivantes :
- mémoriser (E316, E322, E322'), dans une structure à validité limitée (STRUCT), des données personnelles d'authentification (D2) fonction de données personnelles (D1) saisies, lors de la saisie de ces dernières par un utilisateur (U) sur un équipement de saisie (100);
- vérifier (E338, E338') la validité de la structure à validité limitée (STRUCT) avant d'utiliser (E339, E339', E340') les données personnelles d'authentification (D2) qu'elle contient pour générer une autorisation ou un refus d'exécuter une fonction (C, C') mise en oeuvre dans le traitement d'un message généré par un équipement de traitement (200) distinct de l'équipement de saisie (100).

2. Procédé selon la revendication 1, comprenant les étapes suivantes :
- saisir (E312), par l'utilisateur, les données personnelles (D1) à l'aide de l'équipement de saisie (100);
- authentifier l'utilisateur à partir des données personnelles saisies (D1) pour générer l'autorisation ou le refus d'exécuter la fonction protégée (C, C');
- exécuter (E340, E350') la fonction en cas d'autorisation;
procédé dans lequel :
les étapes de mémorisation (E316, E322, E322') et de vérification (E338, E338') sont mises en oeuvre dans un module à mémoire (120) connecté respectivement à l'équipement de saisie (100) lors des étapes de saisie et de mémorisation, et à l'équipement de traitement (200) lors des étapes de vérification et d'exécution;
ladite structure à validité limitée (STRUCT) comprend des données personnelles d'authentification à validité limitée par association d'une durée de validité (DV) aux données personnelles d'authentification (D2).

3. Procédé selon la revendication 1 ou 2, dans lequel la génération de l'autorisation ou du refus est fonction d'une vérification (E316, E340') des données personnelles saisies (D1) avec des données de référence, le résultat de la vérification étant obtenu en utilisant lesdites données personnelles d'authentification (D2) mémorisées dans la structure à validité limitée mémorisées (STRUCT).

4. Procédé selon la revendication 2 ou la revendication 3 prise dans sa dépendance à la revendication 2, comprenant une étape de comparaison (E316) des données personnelles saisies (D1) avec des données personnelles préenregistrées dans le module à mémoire (120), et les données personnelles d'authentification (D2) mémorisées dans la structure à validité limitée (STRUCT) comprennent le résultat de la comparaison.

5. Procédé selon l'une des revendications 1 à 3, dans lequel les données personnelles d'authentification (D2) mémorisées dans la structure à validité limitée (STRUCT) comprennent les données personnelles saisies (D1), et leur utilisation comprend une sous-étape de comparaison (E340') des données personnelles d'authentification (D2) mémorisées dans la structure à validité limitée avec des données personnelles préenregistrées.

6. Procédé selon l'une des revendications 1 à 5, dans lequel ladite structure à validité limitée (STRUCT) comprend des données personnelles d'authentification à validité limitée par association d'une durée de validité (DV) aux données personnelles d'authentification (D2), et
la durée de validité (DV) associée aux données personnelles d'authentification (STRUCT, D2) est comptabilisée par la décharge d'une capacité électrique (1204) prévue.

7. Procédé selon la revendication 6, dans lequel les données personnelles d'authentification (D2, STRUCT) sont mémorisées dans une mémoire volatile (1203), alimentée temporairement par ladite capacité électrique (1204).

8. Procédé selon l'une des revendications 1 à 5, dans lequel les données personnelles d'authentification (D2, STRUCT) sont mémorisées dans une mémoire volatile (1203) d'un module à mémoire (120), continuellement alimentée pendant le contrôle de l'exécution de la fonction protégée (C, C') ou dans une mémoire réinscriptible, et une durée de validité (DV) qui leur est associée est définie par mémorisation d'une grandeur temporelle dans une variable associée, en mémoire, aux données personnelles d'authentification.

9. Procédé selon l'une des revendications 1 à 8, dans lequel la fonction protégée est une commande (C, C') mise en oeuvre, à réception d'un message de l'équipement de traitement (200), par un module à microprocesseur (120) stockant la structure à validité limitée (STRUCT).

10. Procédé selon l'une des revendications 1 à 9, dans lequel un module à mémoire (120) mémorisant la structure à validité limitée (STRUCT) et les données personnelles d'authentification (D2) qu'elle contient est amovible, et est placé dans l'équipement de saisie (100) lors de la saisie (E312) et placé dans l'équipement de traitement (200) lors de la vérification (E338, E338') de la validité de la structure (STRUCT) et lors de l'utilisation (E339, E339', E340') des données personnelles d'authentification à validité limitée (D2).

11. Procédé selon l'une des revendications 1 à 9, dans lequel un module à mémoire (120) mémorisant la structure à validité limitée (STRUCT) et les données personnelles d'authentification (D2) qu'elle contient est relié physiquement à l'équipement de saisie (100) pendant le contrôle de l'exécution de la fonction protégée (C, C'), et l'équipement de traitement (200) communique avec le module à mémoire par communication sans contact.

12. Procédé selon la revendication 10 ou 11, dans lequel le module à mémoire mémorisant la structure à validité limitée et les données personnelles d'authentification (D2, STRUCT) est une carte à microprocesseur sécurisée (120).

13. Procédé selon l'une des revendications précédentes, dans lequel le traitement du message de l'équipement de traitement génère une réponse comprenant au moins une valeur de réponse qui dépend de l'autorisation ou du refus généré.

14. Procédé selon l'une des revendications précédentes, dans lequel l'équipement de saisie (100) est un téléphone mobile de l'utilisateur.

15. Module à mémoire (120) comprenant au moins une mémoire (1203) et un processeur pour exécuter des instructions, le module à mémoire étant configuré pour :
- mémoriser, dans une structure à validité limitée (STRUCT), des données personnelles d'authentification (D2) fonction de données personnelles (D1) saisies par un utilisateur (U) et reçues d'un équipement de saisie (100) auquel le module à mémoire est relié;
- vérifier la validité de la structure à validité limitée avant d'utiliser les données personnelles d'authentification qu'elle contient pour générer une autorisation ou un refus d'exécuter une fonction protégée par authentification (C, C') et mise en oeuvre dans le traitement d'un message reçu d'un équipement de traitement (200) distinct de l'équipement de saisie (100).

16. Système (1) de contrôle de l'exécution d'une fonction (C, C') protégée par authentification d'un utilisateur (U), comprenant :
- un équipement de saisie (100) pour saisir, par l'utilisateur (U), des données personnelles (D1);
- un équipement de traitement (200) distinct de l'équipement de saisie et apte à générer, sous l'action de l'utilisateur, un message à traiter;
- un module à mémoire (120) comprenant au moins une mémoire (1203) et un processeur, et configuré pour authentifier l'utilisateur à partir des données personnelles saisies (D1) de sorte à générer une autorisation ou un refus d'exécuter une fonction protégée (C, C') mise en oeuvre dans le traitement dudit message;
dans lequel le module à mémoire (120) est configuré pour :
- lorsqu'il est connecté à l'équipement de saisie (100), générer et mémoriser, dans sa mémoire, des données personnelles d'authentification à validité limitée (STRUCT, D2) qui sont fonction des données personnelles saisies (D1) et leur associer un paramètre de validité (DV); et
- lorsqu'il est connecté à l'équipement de traitement (200), utiliser, en fonction du paramètre de validité associé, les données personnelles d'authentification mémorisées (STRUCT, D2) pour générer l'autorisation ou le refus d'exécuter la fonction (C, C').

17. Entité électronique (120) comprenant:
- au moins une interface de communication (1201, 1202) pour recevoir des données personnelles (D1) saisies par un utilisateur (U) et un message à traiter,
- une mémoire (1203) stockant, dans une structure de données à validité limitée (STRUCT), des données personnelles d'authentification (D2) qui sont fonction des données personnelles saisies,
- un moyen de limitation (1204), dans le temps ou dans l'espace, de la validité de la structure de données mémorisant les données personnelles d'authentification, et
- un moyen de vérification de la validité de la structure à validité limitée avant d'utiliser les données personnelles d'authentification qu'elle contient pour générer une autorisation ou un refus d'exécuter une fonction (C, C') protégée par authentification et mise en oeuvre dans le traitement du message reçu.
